# EUROPÄISCHE PATENTSCHRIFT

(11) **EP 4 342 795 B1**
(45) Veröffentlichungstag und Bekanntmachung des Hinweises auf die Patenterteilung: **22.10.2025**
(21) Anmeldenummer: 23220738.1
(22) Anmeldetag: 05.05.2022
(51) Int. Cl.: B64D 9/00

(54) **VERRIEGELUNGSVORRICHTUNG UND FRACHTDECK**
LOCKING DEVICE AND CARGO DECK
DISPOSITIF DE VERROUILLAGE ET PONT DE CHARGEMENT

(30) Priorität: 06.05.2021 DE 102021111856
(43) Veröffentlichungstag der Anmeldung: 27.03.2024
(62) Teilanmeldung aus: 22171922.2
(73) Patentinhaber: Telair International GmbH, 83714 Miesbach (DE)
(72) Erfinder: Patzlsperger, Andreas, 83666 Waakirchen (DE); Eham, Josef, 83714 Miesbach (DE); Passreiter, Robert, 85244 Röhrmoos (DE)
(74) Vertreter: Meissner Bolte Partnerschaft mbB

(56) Entgegenhaltungen:
- EP-A1- 3 061 690
- WO-A1-2010/149179
- GB-A- 2 043 584
- US-A- 4 457 649
- US-A- 5 346 161

## Beschreibung

Die Erfindung betrifft eine Verriegelungsvorrichtung zum Sichern von Frachtstücken auf einem Frachtdeck eines Flugzeugs. Des Weiteren betrifft die Erfindung ein Frachtdeck eines Flugzeugs mit wenigstens einer Verriegelungsvorrichtung.

Bei dem Transport von Ladung in Flugzeugen werden häufig Frachtstücke, z. B. Container oder Paletten ("unit load devices - ULDs") verwendet, die quaderförmig oder trapezförmig sind oder eine Form mit einer speziellen Außenkontur aufweisen. Derartige Container oder Paletten können abhängig vom Laderaum des Flugzeugs längsgeladen oder quergeladen werden. Somit ist es notwendig, Riegelelemente hinsichtlich ihrer Position im Frachtraumboden anzupassen. Derartige Riegeleinheiten müssen somit seitlich verstellbar sein, um unsymmetrische Ladekonfigurationen oder unterschiedliche ULD-Breiten verriegeln zu können.

Container oder dergleichen Fracht, die auf dem Frachtboden eines Flugzeugs gesichert werden sollen, können unterschiedliche Größen aufweisen. Zum Sichern von Containern werden Verriegelungselemente mit Riegeln verwendet. Die Riegel umgreifen und halten hierbei einen Teilabschnitt des Containers oder einer Frachtpalette. Hierzu müssen die Abstände zwischen den Riegeln zum Festhalten eines Frachtstücks mit der Größe des jeweiligen Frachtstücks korrespondieren.

Sofern die Abstände der Riegel nicht mit den Größen der Frachtstücke korrespondieren, können diese Frachtstücke von den Riegeln nicht zuverlässig gesichert werden.

WO 2010/149179 A1 offenbart ein Verriegelungselement zur Sicherung von beispielsweise Containern auf dem Frachtraumboden eines Flugzeugs, wobei die Verriegelungsriegel derart in einer Führung eines Rahmens angeordnet sind, dass sie verschiebbar und festsetzbar sind, um die Abstände der Verriegelungsriegel an Container unterschiedlicher Größen anzupassen.

US 4 457 649 A offenbart ein Riegelelement zur Arretierung von Frachtstücken in einer Ebene senkrecht zur Förderrichtung eines Frachtladesystems, insbesondere eines Oberdeck-Frachtladesystems für Großraumflugzeuge, die vom Passagier- in den Frachtbetrieb umrüstbar sind. Das Riegelelement ist an im Frachtraumboden in Flugzeuglängsrichtung angeordneten Sitzschienen lösbar gehaltert und kann in Förderrichtung von den Frachtstücken überrollt werden.

US 5 346 161 A offenbart ein Ladesystem für Frachtflugzeuge, bei dem Container und Paletten verwendet werden. Das System umfasst Träger mit daran befestigten Rollen, die dazu dienen, die Lasten in die vorgesehenen Positionen zu führen.

GB 2 043 584 A offenbart ein Frachtraumsystem für die Beladung von Unterflurräumen in Großraumflugzeugen mit Containern und Paletten, das aus integrierten Rollenbahnen, Kugelmatten, Trag- und Bremsrollen sowie deren Antriebseinrichtungen besteht.

EP 3 061 690 A1 offenbart eine Luftabwurfsicherung eines Verriegelungssystems zur Sicherung von Fracht in einem Flugzeug. Diese umfasst ein Eingreifelement, das eine Überzentriervorrichtung betätigt, welche in eine Position überführt wird, in der eine Wiege das Eingreifelement in eine verborgene Stellung zurückzieht, um die Fracht freizugeben. Aus EP 0 753 457 B1 ist ein Riegelelement der eingangs genannten Art bekannt.

Die Position der Riegel dieses Riegelelements ist nicht veränderbar. Somit kann der Abstand von Riegeln nicht auf Container verschiedener Größe angepasst werden.

Des Weiteren ist es vorzugsweise vorgesehen, dass Riegeleinheiten im Falle von einspuriger Beladung durch breitere ULDs überfahrbar sein müssen. Es ist der Wunsch von Anwendern, dass die entsprechenden Riegelelemente beim Überfahren automatisch abklappen, so dass eine einfache Beladung auch bei Vorhandensein von breiteren ULDs möglich ist.

Es kann notwendig sein, dass Riegelelemente in einem abgeklappten Zustand bzw. in der abgeklappten Konfiguration verriegelt werden müssen, um ein ungewolltes Aufstellen zu verhindern.

Des Weiteren hat sich in der Vergangenheit gezeigt, dass sich im Falle sogenannter "wing opening"-Lastfällen die Tragflächen des Flugzeuges aufgrund hoher Windlasten derart nach unten biegen und verformen, dass dadurch die Flugzeugstruktur des Laderaums in lateraler horizontaler Richtung nach außen verformt.

Während derartiger Ereignisse wandern Riegelelemente für Paletten und Container an der Außenseite des Frachtdecks in Richtung nach außen. Somit wird die gesamte Spurbreite für Paletten und Container bzw. für die entsprechenden Frachtstücke verbreitert. Derartige Lastfälle können dazu führen, dass ULDs von vorhandenen Riegelelementen nicht mehr ausreichend gesichert werden können und sich aus den Riegelelementen lösen. Schlimmstenfalls könnten ULDs aus der vertikalen Verriegelung gelöst werden, so dass an derartigen Stellen keine ausreichende Verriegelung möglich ist.

Des Weiteren ist es häufiger Anwendungswunsch, dass Riegelelemente im Bereich von seitlichen Frachttüren des Frachtdecks eines Flugzeugs beim Ein- und

Ausladen von ULDs seitlich verschoben und abgeklappt werden können. Dies soll einen seitlichen Transfer durch eine Frachttür ermöglichen, ohne dass eine Kollision von ULDs mit den Riegelelementen erfolgt.

Im Lichte des Vorgenannten ist es Aufgabe der vorliegenden Erfindung, eine weiterentwickelte Verriegelungsvorrichtung zum Sichern von Frachtstücken auf einem Frachtdeck eines Flugzeugs anzugeben, wobei den vorgenannten Anwendungswünschen Rechnung getragen werden soll.

Es soll somit möglich sein, dass Verriegelungselemente, insbesondere Befestigungsklauen in lateraler Richtung verschoben werden können.

Des Weiteren soll die Verriegelungsvorrichtung im sogenannten "wing opening"-Lastfall eine ausreichende Sicherung von Frachtstücken gewährleisten. Die Verriegelungsvorrichtung soll derart ausgebildet sein, dass ein automatisches Abklappen beim Überfahren von Befestigungsklauen ermöglicht wird. Eine einfache Feststellung dahingehend, ob die Befestigungsklaue in einem abgeklappten Zustand verriegelt ist, ist ebenfalls wünschenswert.

Des Weiteren ist es eine Aufgabe der vorliegenden Erfindung ein weiterentwickeltes Frachtdeck mit einer weiterentwickelten Verriegelungsvorrichtung anzugeben.

Diese Aufgabe wird im Hinblick auf die Verriegelungsvorrichtung mit den Merkmalen des Anspruches 1 und im Hinblick auf ein Frachtdeck mit den Merkmalen des Anspruches 11 gelöst.

Vorteilhafte Weiterbildungen ergeben sich aus den Ansprüchen.

Konkret wird die Aufgabe durch eine Verriegelungsvorrichtung zum Sichern von Frachtstücken auf einem Frachtdeck eines Flugzeugs gelöst, wobei die Verriegelungseinrichtung folgendes umfasst:
- einen Rahmen mit mindestens zwei Längsträgern,
- mindestens eine Befestigungsklaue mit einer Verriegelungsnase, wobei die Befestigungsklaue an einem Schlittenelement beweglich gelagert ist, wobei die Befestigungsklaue um eine Drehachse, die im Wesentlichen senkrecht zu Führungsschienen verläuft, drehbar an dem Schlittenelement gelagert ist, wobei die Befestigungsklaue mittels eines Kniehebelmechanismus in einer abgeklappten Position arretierbar ist.

Die Verriegelungsvorrichtung weist somit mindestens eine Befestigungsklaue auf, die einen Kniehebelmechanismus aufweist. Das Ausbilden des Kniehebelmechanismus hat den Vorteil, dass die Befestigungsklaue beim Nachunten-Drücken automatisch arretierbar ist. Mit anderen Worten ist der Kniehebelmechanismus derart ausgebildet, dass die Befestigungsklaue in einer abgeklappten Position automatisch arretiert ist. Durch einen leichten Druck auf eine Auslösevorrichtung kann die Befestigungsklaue wieder ausgeschwenkt werden.

Mittels des Kniehebelmechanismus ist die Befestigungsklaue verschwenkbar am Schlittenelement befestigt. Der Kniehebelmechanismus weist mindestens zwei miteinander gelenkig verbundene Hebelelemente auf.

Der Kniehebelmechanismus weist eine Auslösevorrichtung, insbesondere einen Auslöseknopf oder einen Auslöse-Pin, auf, wobei die Auslösevorrichtung bei Betätigung den Kniehebelmechanismus aus einer arretierten, abgeklappten Position der Befestigungsklaue löst. Die Auslösevorrichtung ist als ein Abschnitt mindestens eines Hebelelements des Kniehebelmechanismus ausgebildet. Aufgrund der Betätigung der Auslösevorrichtung wird das weitere Hebelelement, insbesondere das Hebelelement, das mit der Befestigungsklaue verbunden ist bzw. in der Befestigungsklaue befindlich ist, aus einer maximalen Arretierposition gelöst.

Die abgeklappte Position der Befestigungsklaue betrifft die Position der Befestigungsklaue, in der die Befestigungsklaue in vertikaler Erstreckung nicht mehr über die Führungsschienen ragt. Die abgeklappte Position bewirkt ein Versenken der Befestigungsklaue und der daran befindlichen Verriegelungsnase unterhalb der obersten Seitenkante der Längsträger. Somit ist es möglich, dass in dieser abgeklappten Position der Befestigungsklaue Frachtstücke, insbesondere ULDs, über die Verriegelungsvorrichtung transportiert werden können.

Der Druck auf die Auslösevorrichtung kann beispielsweise mittels einer Betätigung per Fuß erfolgen. Mit Hilfe des Kniehebelmechanismus kann sowohl ein Verriegeln als auch ein Entriegeln mit einem Fuß erfolgen. Dies erfüllt den Bedienkomfort.

Aufgrund des erfindungsgemäß ausgebildeten Kniehebelmechanismus kann die Befestigungsklaue in der abgeklappten Position arretiert werden. Aufgrund des Abstützens des Kniehebels an einem Schlittenelement kann dieses Konzept des Kniehebelmechanismus auch für Verriegelungsvorrichtungen verwendet werden, die auf dem Konzept von zwei separaten, individuell verschiebbaren Befestigungsklauen basieren.

Der Kniehebelmechanismus befindet sich geschützt in der Befestigungsklaue. Dies verringert zum einen die Gefahr der Beschädigung des Mechanismus.

Des Weiteren kann der Mechanismus effektiv vor Schmutz und Feuchtigkeit geschützt werden.

Durch Variation der Abklapptiefe kann der Kniehebelmechanismus derart eingestellt werden, dass die Befestigungsklaue beim Überfahren von einem Frachtstück, insbesondere von einem ULD abgeklappt wird und automatisch in dieser abgeklappten Position verriegelt wird.

Das Ausbilden von Führungsschienen, die am Längsträger befestigt sind, wobei in den Führungsschienen mindestens zwei Schlittenelemente verschiebbar gelagert sind, ermöglicht eine verbesserte Kraftübertragung zwischen den Befestigungsklauen und den Längsträgern. Dies ermöglicht auch bei hohen übertragenen Kräften eine Ausführung der Befestigungsklauen sowie der Längsträger aus Aluminium. Dies führt zu hohen Gewichtseinsparungen, da keine Elemente aus Stahl gebildet werden müssen.

Außerdem ermöglicht die erfindungsgemäße Ausbildung von Führungsschienen und dem darin gelagerten Schlittenelement eine bessere Führung bzw. Verschiebbarkeit der Befestigungsklaue. Des Weiteren ist eine derartige Anordnung unempfindlicher gegen Schmutz und schützt vor entsprechenden Beschädigungen der Verriegelungsvorrichtung.

Bei einer bevorzugten Ausführungsform umfasst die Verriegelungsvorrichtung
- mindestens zwei Befestigungsklauen mit jeweils einer Verriegelungsnase, wobei die Befestigungsklauen an mindestens zwei Schlittenelementen beweglich gelagert sind, und
- mindestens zwei Führungsschienen,
- wobei jeweils eine Führungsschiene an jeweils einem Längsträger an unterschiedlichen Positionen befestigbar ist und die mindestens zwei Schlittenelemente an den Führungsschienen verschiebbar gelagert sind, wobei zwischen den Schlittenelementen mindestens eine Druckfeder ausgebildet ist, so dass die beiden Schlittenelemente gegeneinander gefedert gelagert sind.

Bei dieser Ausführungsform wird von einer Verriegelungsvorrichtung ausgegangen, die mindestens zwei Befestigungsklauen mit daran befindlichen Verriegelungsnasen aufweist. Die Befestigungsklauen sind im Rahmen derart verschiebbar und festsetzbar, dass die Position der Befestigungsklauen und der daran befindlichen Verriegelungsnasen im Frachtdeck eines Flugzeugs angepasst werden können. Somit kann der Abstand zwischen den Befestigungsklauen zum Sichern eines Containers auf verschiedene Größen von Containern, insbesondere ULDs, angepasst werden.

Der Rahmen umfasst vorzugsweise mindestens zwei Längsträger und vorzugsweise mindestens zwei endseitige Traversen. Vorzugsweise umfasst der Rahmen vier Seitenelemente, die aus zwei Längsträgern und zwei Traversen gebildet werden.

Da bei dieser Ausführungsform die mindestens zwei Befestigungsklauen jeweils separat an Schlittenelementen beweglich gelagert sind, können die Befestigungsklauen voneinander unabhängige Schwenkbewegungen durchführen. Die tatsächliche Verriegelung bzw. Befestigung der Frachtstücke erfolgt mittels der an den Befestigungsklauen befindlichen Verriegelungsnasen.

Der Abstand zwischen den Befestigungsklauen ist variabel. Der Abstand kann an bestimmte Beladesituationen angepasst werden, indem zwischen den Schlittenelementen mindestens eine Druckfeder ausgebildet ist, so dass die beiden Schlittenelemente gegeneinander gefedert gelagert sind.

Insbesondere im "wing opening"-Belastungsfall können die Verriegelungsnasen die Befestigung der Frachtstücke weiter gewährleisten, indem die Schlittenelemente voneinander weg bewegt werden. Die jeweiligen Befestigungsklauen können im Falle von "wing opening"-Belastungsfällen der jeweils gesicherten Palette oder dem Container folgen, so dass für beide Befestigungsklauen eine vertikale Verriegelung der Ladung der jeweiligen Frachtstücke gewährleistet wird.

Nach Beendigung des sogenannten "wing openings"-Belastungsfalls können die Schlittenelemente aufgrund der zwischen den Schlittenelementen ausgebildeten Druckfeder wieder zueinander bewegt werden. Der Abstand zwischen den Schlittenelementen verringert sich, so dass die Befestigungsklauen mit den daran befindlichen Verriegelungsnasen die Frachtstücke weiterhin in vertikaler Richtung sichern können.

Bei der beschriebenen Ausführungsform sind die Schlittenelemente an den Führungsschienen verschiebbar gelagert. Hierzu weisen die Schlittenelemente vorzugsweise an zwei Seiten Gleitelemente auf, so dass die Schlittenelemente selbst an den Führungsschienen verschiebbar gelagert sind. Aufgrund der freien Bewegung der Schlittenelemente in den Führungsschienen kann eine laterale Federung ermöglicht werden.

Die Schlittenelemente sind mit anderen Worten nicht direkt mit den mindestens zwei Längsträgern verbunden bzw. nicht direkt an den Längsträgern gelagert. Die mindestens zwei Führungsschienen bilden eine Art zwischengeschaltetes Schlittenelement, so dass eine laterale Federung positiv beeinflusst wird. Die Befestigungsklauen in den Schlittenelementen vorzugsweise derart angeordnet, dass die Befestigungsklauen (in entgegengesetzte Schwenkrichtungen) nach unten klappbar sind.

Mit Hilfe der Ausbildung einer Führungsschiene als eine Art Zwischenelement zur Lagerung der Befestigungsklauen an den Längsträgern eines Rahmens ist es möglich, dass die Befestigungsklauen paarweise entlang der Längsträger verschiebbar sind.

Die Führungsschienen sind in oder an den Längsträgern vorzugsweise lösbar befestigt. In einer besonders bevorzugten Ausführungsform sind die

Führungsschienen in nutförmigen Ausnehmungen der Längsträger lösbar befestigt. Die lösbare Befestigung der Führungsschienen erfolgt derart, dass die Führungsschienen hinsichtlich ihrer jeweiligen Position in Relation zum jeweiligen Längsträger variabel anordenbar sind.

Die Führungsschienen sind vorzugsweise deckungsgleich zueinander ausgebildet. Mit anderen Worten soll kein lateraler Versatz zwischen den Führungsschienen ausgebildet sein. Vielmehr sollen die Führungsschienen gleichsinnig in den Längsträgern verschiebbar sein. Eine variable Anordnung der Führungsschienen in oder an den Längsträgern ist vorzugsweise durch unterschiedliche Öffnungen, die in den Längsträgern ausgebildet sind, möglich. Diese Öffnungen in den Längsträgern ermöglichen aufgrund unterschiedlicher Abstände zwischen den Öffnungen und der Anzahl von Öffnungen unterschiedliche Positionen hinsichtlich der Befestigungsklauen in Relation zu den Längsträgern bzw. zum gesamten Rahmen.

Es ist möglich, dass die Führungsschienen miteinander verbunden sein können. Die Führungsschienen können beispielsweise mittels Traversen und/oder Verbindungsstegen miteinander verbunden sein. Ebenso ist es möglich, dass die Führungsschienen mit Hilfe eines einzigen Verbindungssteges miteinander verbunden sind. Bei einer derartigen Ausführungsform der Erfindung ist der Verbindungssteg hinsichtlich beider Führungsschienen bzgl. deren Längserstreckung mittig ausgebildet. In einer Draufsicht bilden die Führungsschienen mit dem mittigen Verbindungssteg eine H-Form.

Miteinander verbundende Führungsschienen können einen Schlitten oder einen Rahmen bilden.

Vorzugsweise bilden die mindestens zwei Führungsschienen, die mindestens zwei Befestigungsklauen und die mindestens zwei Schlittenelemente eine Baugruppe, wobei diese Baugruppe in Relation zu den Längsträgern variabel positionier- und befestigbar ist.

In Relation zu den Längsträgern bzw. zum gesamten Rahmen kann die Baugruppe komplett verschoben werden. Dies ermöglicht es, dass die Befestigungsklauen außermittig positioniert werden können. Dies ermöglicht eine unsymmetrische ULD-Konfiguration laden und befestigen zu können.

Aufgrund der zusätzlichen Lagerung der Schlittenelemente in den beiden Führungsschienen, so dass die Schlittenelemente gegeneinander verschiebbar und gefedert sind, können die bereits genannten "wing opening"-Belastungsfälle hinsichtlich der dabei korrekten Verriegelung und Befestigung von Frachtstücken beachtet werden.

In einer besonders bevorzugten Ausführungsform der Erfindung sind zwischen den Schlittenelementen mindestens zwei Federeinheiten ausgebildet, wobei eine Federeinheit mindestens eine Druckfeder aufweist. Mit anderen Worten können zwischen den Schlittenelementen mindestens zwei Druckfedern ausgebildet sein. Die Federeinheiten befinden sich vorzugsweise an unterschiedlichen Stellen zwischen den mindestens zwei Schlittenelementen. Vorzugsweise ist die Anordnung in Relation zu einer zwischen den beiden Führungsschienen ausgebildeten Längsachse der Verriegelungsvorrichtung symmetrisch. Dies dient einer entsprechend gleichmäßigen Belastung der beiden Federeinheiten.

Da die mindestens eine Druckfeder, vorzugsweise die mindestens zwei Federeinheiten, bevorzugt zwischen den Schlittenelementen ausgebildet sind, werden die mindestens eine Druckfeder bzw. die mindestens zwei Federeinheiten bei einer Bewegung der obengenannten Baugruppe entsprechend mitbewegt. Es müssen somit keine separaten Federeinheiten für unterschiedliche Positionierungen der Befestigungsklauen ausgebildet werden. Dies vereinfacht den Aufbau der Verriegelungsvorrichtung und minimiert die Anzahl notwendig werdender Federeinheiten.

Mindestens eine Befestigungsklaue kann um eine Drehachse, die im Wesentlichen senkrecht zu den Führungsschienen verläuft, drehbar an einem Schlittenelement gelagert sein. Bei einer Ausbildung der Drehachse die im Wesentlichen senkrecht zu den Führungsschienen verläuft, ist keine zwangsweise mathematisch korrekte senkrechte Ausbildung zu verstehen. Vielmehr soll dies die wesentliche Tendenz der Ausrichtung der Drehachse angeben.

Die beiden Längsträger des Rahmens können auch als Biegeträger, insbesondere als seitliche Biegeträger bezeichnet werden. Die Längsträger dienen entsprechend zur Kraftaufnahme von auf die Befestigungsklauen wirkenden Kräften.

Die Führungsschienen bewirken eine Übertragung von hohen Zug- und Verdrehkräften, die auf die Befestigungsklauen wirken, in die beiden Längsträger. Da die Schlittenelemente nicht direkt, wie beispielsweise mittels Achsstummeln, mit den Längsträgern verbunden sind, können aufgrund der ausgebildeten Führungsschienen weitaus höhere Zug- und Verdrehkräfte aufgenommen werden.

Der Rahmen der Verriegelungsvorrichtung umfasst vorzugsweise Befestigungseinrichtungen, mit denen der Rahmen an einem Frachtraumboden eines Flugzeugs befestigt werden kann.

Mindestens eine der Führungsschienen kann als C-Profil-Schiene ausgebildet sein. Dies ermöglicht eine derartige gleitende Lagerung der Schlittenelemente in der Führungsschiene, dass ein seitliches Herausrutschen von Gleitelementen der Schlittenelemente aus der Führungsschiene verhindert wird.

Mindestens eine Führungsschiene kann an mindestens einem der Längsträger mittels eines, insbesondere vorgespannten, Befestigungsstiftes lösbar befestigt sein, wobei der Befestigungsstift in eine Öffnung der Führungsschiene eingreift.

In einer weiteren Ausführungsform umfasst der Befestigungsstift eine Feder. Der Befestigungsstift kann zum Lösen einer vorliegenden Verbindung mit der Führungsschiene entgegen einer Federkraft verschiebbar gelagert sein. Dies hat den Vorteil, dass der Befestigungsstift einfach gelöst werden kann. Ein weiterer Vorteil ist, dass ein Befestigungsstift an definierten Positionen, d. h. in der nahen Umgebung von einer Öffnung der Führungsschiene, durch die Federkraft einfach einrasten kann.

In einer bevorzugten Ausführungsform der Erfindung kann der Befestigungsstift mittels einer Kulissenführungs-Vorrichtung arretiert und/oder gelöst werden.

In der Führungsschiene kann mindestens ein Anschlagelement für mindestens ein Schlittenelement ausgebildet sein. Das Schlittenelement kann in der Führungsschiene in einer definierten Strecke frei bewegbar sein. Mit Hilfe des Anschlagelements wird bei einem Anliegen des Schlittenelements am Anschlagelement die Kraft vom Schlittenelement über das Anschlagelement in die Führungsschiene und von der Führungsschiene in den Längsträger übertragen.

Vorzugsweise ist das mindestens eine Anschlagelement in der Führungsschiene als Anschlagelement für mindestens zwei Schlittenelemente ausgebildet. Mit Hilfe des Anschlagelements kann der minimalste Abstand zwischen den Schlittenelementen eingestellt werden. Vorzugsweise ist das Anschlagelement in der Führungsschiene als Vorsprung ausgebildet. Das Anschlagelement ist in lateraler Erstreckung vorzugsweise an einer mittigen Position ausgebildet.

In einer weiteren Ausführungsform der Erfindung weist ein Schlittenelement Anschlagflächen und/oder Anschlagkanten auf, die eine Schwenkbewegung der Befestigungsklaue begrenzen. Mit anderen Worten kann mit Hilfe von Anschlagflächen und/oder Anschlagkanten des Schlittenelements der Bewegungsradius der Befestigungsklaue definiert werden. Dies betrifft sowohl die Bewegung der Befestigungsklaue zur Einnahme einer abgeklappten Position als auch den Bewegungsradius der Befestigungsklaue zur Einnahme einer aufgeklappten Position.

Ein Aspekt der Erfindung betrifft ein Frachtdeck eines Flugzeugs mit mindestens einer erfindungsgemäßen Verriegelungsvorrichtung. Der Rahmen der Verriegelungsvorrichtung ist dabei am Boden des Frachtdecks befestigt.

Es ergeben sich ähnliche Vorteile, wie diese bereits im Zusammenhang mit der erfindungsgemäßen Verriegelungsvorrichtung genannt wurden.

Die Erfindung wird nachstehend mit weiteren Einzelheiten unter Bezug auf die beigefügten Zeichnungen näher erläutert. Die dargestellten Ausführungsformen stellen Beispiele dar, wie die erfindungsgemäße Verriegelungsvorrichtung ausgestaltet sein kann.

In diesen zeigen:
- Fig. 1a und 1b: die erfindungsgemäße Verriegelungsvorrichtung in einer Draufsicht sowie in einer perspektivischen Seitendarstellung;
- Fig. 2a und 2b: eine Schnittdarstellung mit Befestigungsklauen in einem aufgeklappten und einem abgeklappten Zustand;
- Fig. 3: eine erfindungsgemäße Verriegelungsvorrichtung mit Darstellung einer verschobenen Position der Befestigungsklauen; und
- Fig. 4: eine perspektivische Darstellung einer Baugruppe der erfindungsgemäßen Verriegelungsvorrichtung.

In der nachfolgenden Beschreibung werden für gleiche und gleich wirkende Teile dieselben Bezugsziffern verwendet.

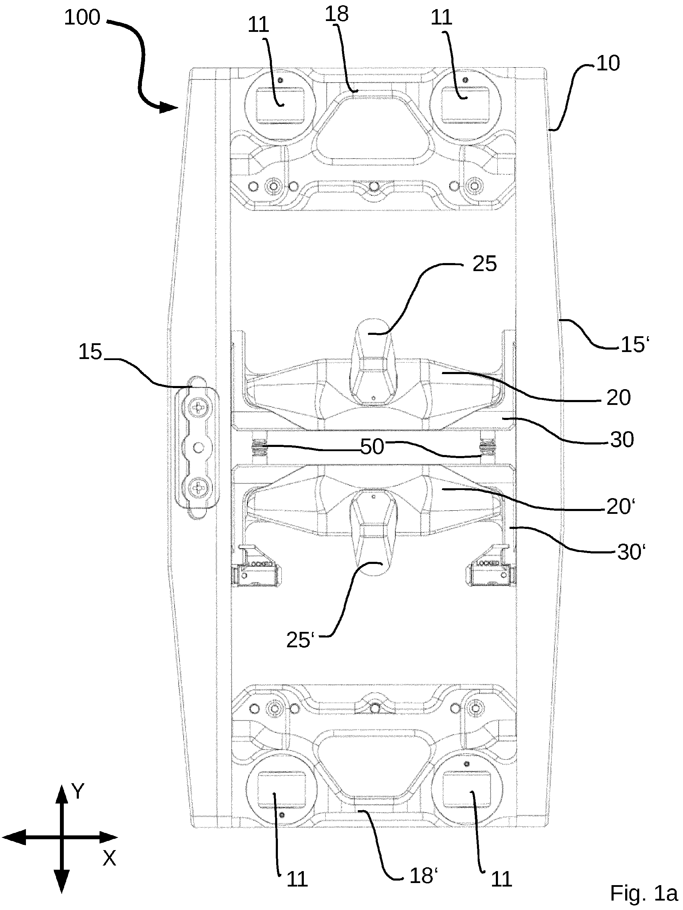

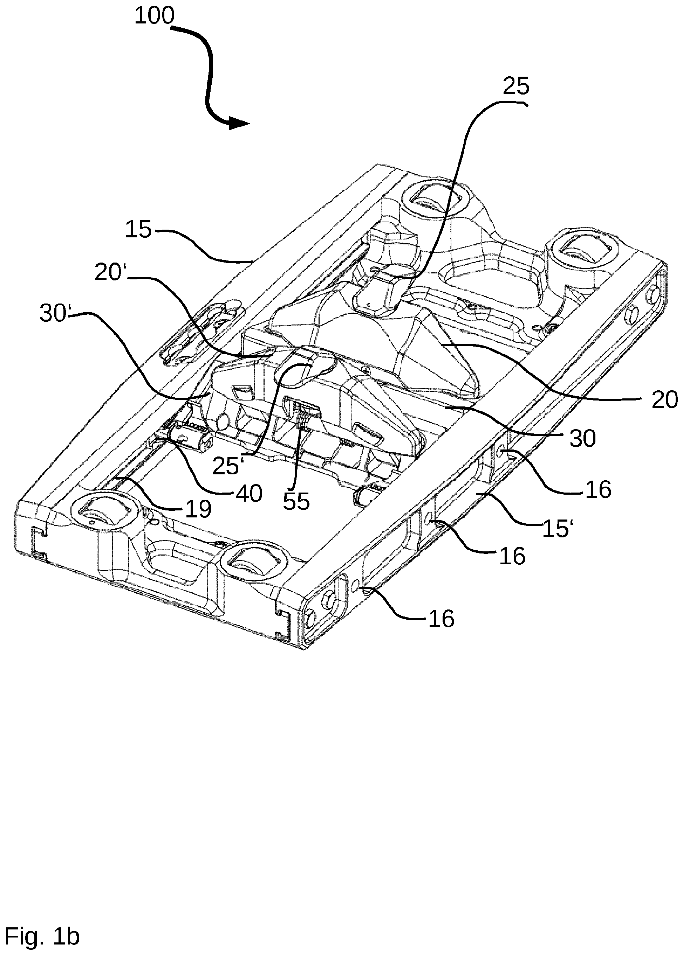

In den Figuren 1a und 1b ist eine Draufsicht (Fig. 1a) sowie eine perspektivische Seitenansicht (Fig. 1b) einer möglichen Ausführungsform hinsichtlich einer Verriegelungsvorrichtung 100 dargestellt.

Die Verriegelungsvorrichtung 100 weist einen Rahmen 10 auf. Der Rahmen 10 weist zwei Längsträger 15, 15' sowie Traversen 18, 18' auf. Der Rahmen 10 wird durch die vier Seitenelemente, nämlich die zwei Längsträger 15, 15' sowie die zwei Traversen 18, 18' gebildet.

In den Traversen 18, 18' sind Rollen 11 ausgebildet. Diese Rollen 11 dienen zum Transport von Frachtstücken, insbesondere von ULDs über die Verriegelungsvorrichtung 100 hinweg.

Des Weiteren sind zwei Befestigungsklauen 20, 20' zu erkennen. Die Befestigungsklauen 20, 20' weisen jeweils eine Verriegelungsnase 25, 25' auf.

Die Befestigungsklauen 20, 20' sind jeweils an einem Schlittenelement 30, 30' beweglich gelagert.

Die Verriegelungsvorrichtung 100 umfasst des Weiteren zwei Führungsschienen 40, 40'. In Fig. 1b ist die linke Führungsschiene 40 zumindest abschnittsweise zu erkennen.

Die Führungsschienen 40, 40' sind an den Längsträgern 15, 15' an unterschiedlichen Positionen befestigbar. Hierzu weisen die Längsträger 15, 15' Öffnung 16 auf (siehe Fig. 1b, rechte Seite). In diesen Öffnungen 16 können die Führungsschienen 40, 40' an unterschiedlichen Positionen der Längsträger 15, 15' befestigt werden.

Die Schlittenelemente 30, 30' sind an den Führungsschienen 40, 40' verschiebbar gelagert.

Wie in Fig. 1a zu erkennen ist, sind zwischen den Schlittenelementen 30, 30' Druckfedern 50 ausgebildet. Mit Hilfe der dargestellten Konstruktion einer Verriegelungsvorrichtung 100 ist es möglich, dass die Schlittenelemente 30, 30' zum einen in den Führungsschienen 40, 40' verschiebbar gelagert sind, wobei die Führungsschienen 40, 40' wiederum an unterschiedlichen Positionen der Längsträger 15, 15' befestigbar sind. Da die Schlittenelemente 30, 30' nicht direkt an den Längsträgern 15, 15' gelagert sind, sondern die Führungsschienen 40, 40' als eine Art Zwischenschlitten ausgebildet sind, wird eine laterale Federung ermöglicht. Die Schlittenelemente 30, 30' sind zusammen mit den Befestigungsklauen 20, 20' paarweise entlang der y-Achse verschiebbar.

Da zwischen Schlittenelementen 30 und 30', an denen die Befestigungsklauen 20, 20' beweglich gelagert sind, Druckfedern 50 ausgebildet sind, werden diese Druckfedern 50 zusammen mit den weiteren Bauteilen, d. h. zusammen mit der Führungsschiene 40, 40', den Schlittenelementen 30, 30' sowie mit den Befestigungsklauen 20, 20' verschoben.

Die beiden Schlittenelemente 30, 30' sind gegeneinander verschiebbar und gefedert gelagert. Im Falle eines "wing opening"-Belastungsfalls können die beiden Befestigungsklauen 20, 20' den jeweiligen Containern bzw. ULDs folgen, so dass auch in diesem Fall eine vertikale Verriegelung der Ladung gewährleistet wird.

Die Führungsschienen 40, 40' sind an den Längsträgern in nutförmigen Ausnehmungen 19 der Längsträger 15, 15' lösbar befestigt.

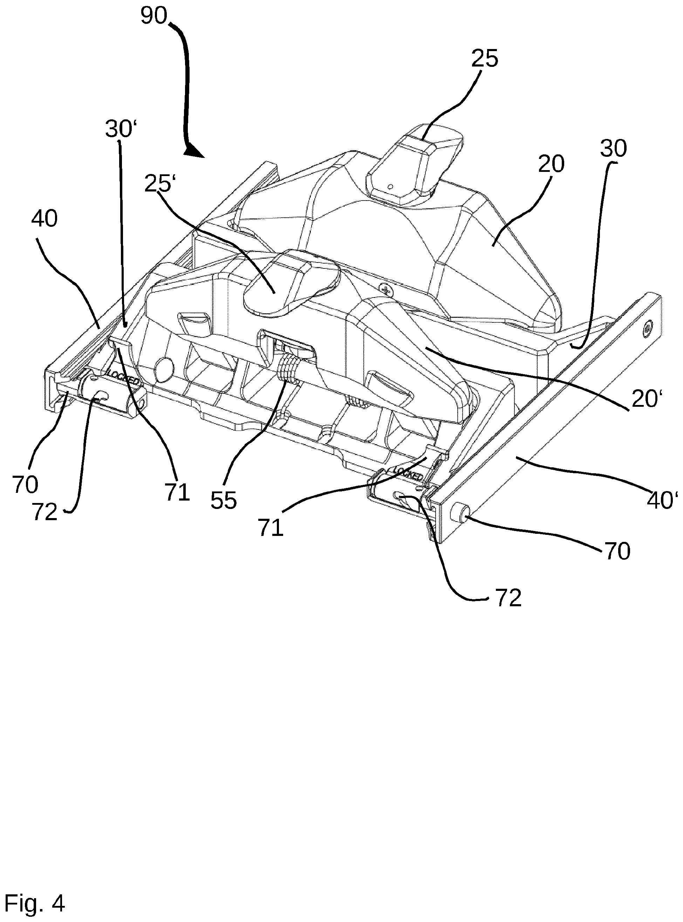

In Fig. 4 ist die Baugruppe 90 losgelöst von dem Rahmen 10 bzw. den Längsträgern 15, 15' dargestellt. Es ist zu erkennen, dass die Baugruppe 90 von den zwei Führungsschienen 40, 40', den Befestigungsklauen 20, 20', den Schlittenelementen 30, 30' sowie den (hier nicht sichtbaren) Druckfedern gebildet wird. Diese gesamte Baugruppe 90 ist in den nutförmigen Ausnehmungen 19 der Längsträger 15, 15' verschiebbar gelagert.

In Fig. 4 ist zu erkennen, dass die Befestigung der Baugruppe 90 an den Längsträgern 15, 15' mittels eines vorgespannten Befestigungsstiftes 70 erfolgen kann.

Der Befestigungsstift 70 greift in eine der Öffnungen 16 der Längsträger 15, 15' (siehe Fig. 1b) ein. Mittels eines Hebels kann eine Kulissenführungs-Vorrichtung 72 betätigt werden. Mit Hilfe dieser Kulissenführungs-Vorrichtung 72 kann der Befestigungsstift 40 arretiert sowie gelöst werden. Aufgrund der Vorspannung des Befestigungsstiftes 70, die mittels einer Feder (nicht dargestellt) realisiert wird, kann der Befestigungsstift 70 selbstständig in eine Öffnung 16 gleiten, sofern sich der Befestigungsstift 70 in direkter Nähe zu der Öffnung 16 befindet und in diese bereits teilweise eingreift. Anschließend erfolgt ein manuelles Verschließen der Vorrichtung mittels des Hebels 72. In den Führungsschienen 40, 40' kann des Weiteren an einer mittigen Position hinsichtlich der Längserstreckung ein Anschlagelement (nicht dargestellt) ausgebildet sein. An diesem Anschlagelement können die Schlittenelemente 30, 30' mittig anschlagen, so dass mit Hilfe eines Anschlagelements der minimalste Abstand zwischen den Schlittenelementen 30, 30' einstellbar ist.

In den Fig. 1a und 1b werden die Befestigungsklauen 20, 20' in einer aufgeklappten Position dargestellt. In einer derartigen Position würde eine Verriegelung bzw. vertikale Befestigung mit einem Container/ULD erfolgen.

Um das Transportieren von Containern/ULDs über der Verriegelungsvorrichtung 100 hinweg ermöglichen zu können, müssen die Befestigungsklauen 20, 20' abklappbar ausgebildet sein. Des Weiteren ist es vorgesehen, dass die Verriegelungsnasen 25, 25' seitlich weggeklappt werden können. Die Befestigungsnasen 25 und 25' sind somit in Richtung der x-Achse seitlich bewegbar.

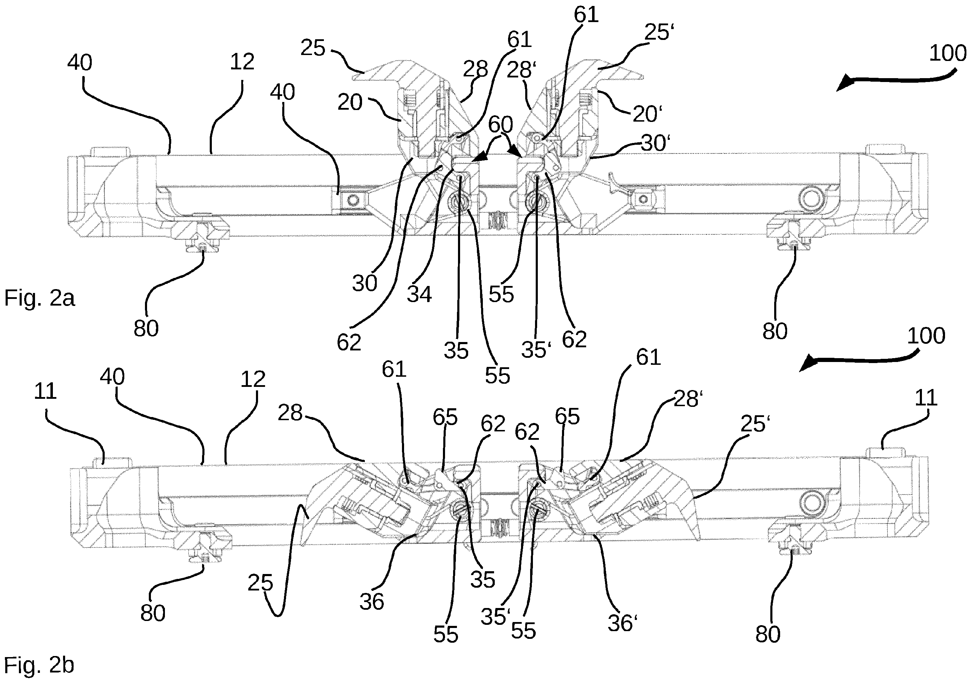

In Fig. 2a ist der aufgeklappte Zustand der Befestigungsklauen 20, 20' dargestellt. In dieser Darstellung ist ebenfalls die Druckfeder 50 zu erkennen, die die beiden Schlittenelemente 30, 30' federnd voneinander beabstandet.

Sofern eine der Befestigungsklauen 20, 20' abgeklappt werden soll, kann durch entsprechende Kraftauftragung auf die Fläche 28, 28' der Befestigungsklaue 20, 20' ein Abklappen nach unten erfolgen. Die Befestigungsklauen 20, 20' sind drehbar in Relation zum Schlittenelement 30, 30' gelagert. Die Drehachse 35, 35' ist entsprechend zu erkennen.

Das Abklappen erfolgt mit Hilfe eines Kniehebelmechanismus 60. Dieser Kniehebelmechanismus 60 weist ein erstes Hebelelement 61 sowie ein zweites Hebelelement 62 auf. Das erste Hebelelement 61 ist an der Befestigungsklaue 20, 20' befestigt. Das zweite Hebelelement 62 ist jeweils am Schlittenelement 30, 30' befestigt.

In Fig. 2b werden die Befestigungsklauen 20, 20' jeweils im abgeklappten und arretierten Zustand dargestellt. Die Befestigungsklauen 20, 20' sind derart nach unten geklappt, dass diese nicht mehr über den Längsträger 15, 15' überstehen. Die Fläche 28, 28' der Befestigungsklaue 20, 20' ist derart gedreht, dass diese nunmehr fluchtend zur obersten Seitenkante 12 des Längsträgers 15, 15' anliegt. Etwaige Frachtstücke und ULDs können in diesem Zustand der Befestigungsklauen 20, 20' mit Hilfe der Rollen 11 über die Verriegelungsvorrichtung 100 hinweg transportiert werden.

Der Kniehebelmechanismus 60, 60' ist in der in Fig. 2b dargestellten Position derart ausgebildet, dass ein Abschnitt des zweiten Hebelelements 62 nach oben weist. Dieser Abschnitt dient als Auslösevorrichtung 65. Durch leichte Druckbeaufschlagung, die beispielsweise aufgrund der Betätigung mittels eines Fuß aufgebracht werden kann, wird der Kniehebelmechanismus 60, 60' ausgelöst, so dass die Befestigungsklauen 20, 20' wieder nach oben geklappt werden können, so dass diese ihre ursprüngliche Position gemäß Fig. 2a einnehmen können.

Um nach oben schwenken zu können, d. h. um eine vertikale Position einnehmen zu können, sind in den Schlittenelementen 30, 30' entsprechende Federn 55 ausgebildet, so dass bei Betätigung der Auslösevorrichtung 65 mittels der Federn 55 die Befestigungsklauen 20, 20' nach oben geschwenkt werden können.

An den Schlittenelementen 30, 30' sind Anschlagflächen 34, 34' und 36, 36' ausgebildet, die die Schwenkbewegungen der Befestigungsklauen 20, 20' begrenzen.

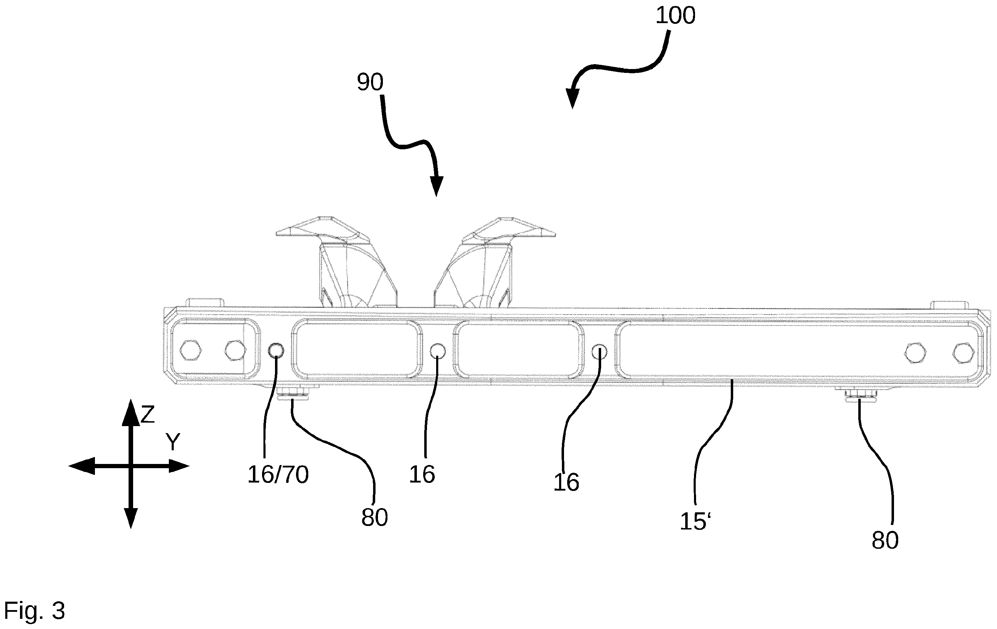

In Fig. 3 wird eine alternative Positionierung der Baugruppe 90 angedeutet. Es ist zu erkennen, dass die Befestigungsklauen 20, 20' im dargestellten Beispiel nach unten (in Relation zu Fig. 1a) bzw. nach links verschoben wurden. Die Befestigungsklauen 20, 20' sind zusammen mit den Verriegelungsnasen 25, 25' in einer aufgeklappten Position angeordnet. Im vorliegenden Fall ist die Baugruppe 90 mittels eines Befestigungsstiftes 70 an der Öffnung 16, die ganz links an dem Längsträger 15' ausgebildet ist, befestigt.

In dieser Seitenansicht ist ebenfalls zu erkennen, dass die Verriegelungsvorrichtung 100 Befestigungsmittel 80 aufweist, mit deren Hilfe eine Befestigung der Verriegelungsvorrichtung 100 am Boden eines Frachtdecks ermöglicht wird.

### Bezugszeichen

- 10: Rahmen
- 11: Rolle
- 12: Seitenkante
- 15, 15': Längsträger
- 16: Öffnung
- 18, 18': Traverse
- 19: nutförmige Ausnehmung
- 20, 20': Befestigungsklaue
- 25, 25': Verriegelungsnase
- 28, 28': Fläche
- 30, 30': Schlittenelement
- 34, 34': Anschlagfläche
- 35, 35': Drehachse
- 36, 36': Anschlagfläche
- 40, 40': Führungsschiene
- 50, 50': Druckfeder
- 55: Feder
- 60: Kniehebelmechanismus
- 61: erstes Hebelelement
- 62: zweites Hebelelement
- 65: Auslösevorrichtung
- 70: Befestigungsstift
- 71: Hebel
- 72: Kulissenführungs-Vorrichtung
- 80: Befestigungsmittel
- 90: Baugruppe
- 100: Verriegelungsvorrichtung

## Patentansprüche

1. Verriegelungsvorrichtung (100) zum Sichern von Frachtstücken in einem Frachtdeck eines Flugzeugs, umfassend:
- einen Rahmen (10) mit mindestens zwei Längsträgern (15, 15'),
- ein Schlittenelement (30, 30'),
- Führungsschienen (40, 40'),
- mindestens eine Befestigungsklaue (20, 20') mit einer Verriegelungsnase (25, 25'), wobei die Befestigungsklaue (20, 20') an dem Schlittenelement (30, 30') beweglich gelagert ist, wobei die Befestigungsklaue (20, 20') um eine Drehachse (35, 35'), die im Wesentlichen senkrecht zu den Führungsschienen (40, 40') verläuft, drehbar an dem Schlittenelement (30, 30') gelagert ist,
**dadurch gekennzeichnet, dass**
die Befestigungsklaue (20, 20') mittels eines Kniehebelmechanismus (60) in einer abgeklappten Position arretierbar ist, wobei der Kniehebelmechanismus (60) eine Auslösevorrichtung (65) aufweist, die bei Betätigung den Kniehebelmechanismus (60) aus einer arretierten, abgeklappten Position der Befestigungsklaue (20, 20') löst, wobei die Auslösevorrichtung (65) als ein Abschnitt mindestens eines Hebelelements (62) des Kniehebelmechanismus (60) ausgebildet ist.

2. Verriegelungsvorrichtung (100) nach Anspruch 1,
**gekennzeichnet durch,**
- mindestens zwei Befestigungsklauen (20, 20') mit jeweils einer Verriegelungsnase (25, 25'), wobei die Befestigungsklauen (20, 20') an mindestens zwei Schlittenelementen (30, 30') beweglich gelagert sind,
- mindestens zwei Führungsschienen (40, 40'),
wobei jeweils eine Führungsschiene (40, 40') an jeweils einem Längsträger (15, 15) an unterschiedlichen Positionen befestigbar ist und die mindestens zwei Schlittenelemente (30, 30') an den Führungsschienen (40, 40') verschiebbar gelagert sind, wobei
zwischen den Schlittenelementen (30, 30') mindestens eine Druckfeder (50) ausgebildet ist, sodass die beiden Schlittenelemente (30, 30') gegeneinander gefedert gelagert sind.

3. Verriegelungsvorrichtung (100) nach Anspruch 2,
**dadurch gekennzeichnet, dass**
die Führungsschienen (40, 40') in oder an den Längsträgern (15, 15'), vorzugsweise in nutförmigen Ausnehmungen (19) der Längsträger (15, 15'), lösbar befestigt sind, derart, dass die Führungsschienen (40, 40') hinsichtlich ihrer jeweiligen Position in Relation zum jeweiligen Längsträger (15, 15') variabel anordenbar sind.

4. Verriegelungsvorrichtung (100) nach Anspruch 2 oder 3,
**dadurch gekennzeichnet, dass**
die mindestens zwei Führungsschienen (40, 40'), die mindestens zwei Befestigungsklauen (20, 20') und die mindestens zwei Schlittenelemente (30, 30') eine Baugruppe bilden, wobei die Baugruppe in Relation zu den Längsträgern (15, 15') variabel positionier- und befestigbar ist.

5. Verriegelungsvorrichtung (100) nach einem der Ansprüche 2 bis 4,
**dadurch gekennzeichnet, dass**
zwischen den Schlittenelementen (30, 30') mindestens zwei Federeinheiten ausgebildet sind, wobei eine Federeinheit mindestens eine Druckfeder (50) aufweist.

6. Verriegelungsvorrichtung (100) nach einem der vorangegangenen Ansprüche,
**dadurch gekennzeichnet, dass**
mindestens eine Führungsschiene als C-Profil-Schiene ausgebildet ist.

7. Verriegelungsvorrichtung (100) nach einem der vorangegangenen Ansprüche,
**dadurch gekennzeichnet, dass**
mindestens eine Führungsschiene (40, 40') an mindestens einem der Längsträger (15, 15') mittels eines, insbesondere vorgespannten, Befestigungsstiftes (70) lösbar befestigt ist, wobei der Befestigungsstift (70) in eine Öffnung (16) der Führungsschiene (40, 40') eingreift.

8. Verriegelungsvorrichtung (100) nach Anspruch 7,
**dadurch gekennzeichnet, dass**
der Befestigungsstift (70) mittels einer Kulissenführungs-Vorrichtung (72) arretiert und/oder gelöst wird.

9. Verriegelungsvorrichtung (100) nach einem der vorangegangenen Ansprüche,
**dadurch gekennzeichnet, dass**
in der Führungsschiene (40, 40') mindestens ein Anschlagelement für mindestens ein Schlittenelement (30, 30') ausgebildet ist.

10. Verriegelungsvorrichtung (100) nach einem der vorangegangenen Ansprüche,
**dadurch gekennzeichnet, dass**
mindestens ein Schlittenelement (30, 30') Anschlagflächen (34, 34', 36, 36') und/oder Anschlagkanten aufweist, die eine Schwenkbewegung der Befestigungsklaue begrenzen.

11. Frachtdeck eines Flugzeugs mit mindestens einer Verriegelungsvorrichtung (100) nach einem der vorangegangenen Ansprüche, wobei der Rahmen (10) am Boden des Frachtdecks befestigt ist.

## Claims

1. A locking device (100) for securing cargo items on a cargo deck of an aircraft, comprising:
- a frame (10) having at least two longitudinal members (15, 15'),
- a carriage element (30, 30'),
- guide rails (40, 40'),
- at least one fastening claw (20, 20') with a locking lug (25, 25'), wherein the fastening claw (20, 20') is movably mounted on the carriage element (30, 30'), wherein the fastening claw (20, 20') is rotatably mounted on the carriage element (30, 30') about an axis of rotation (35, 35') extending substantially perpendicular to the guide rails (40, 40'),
**characterized in that**
the fastening claw (20, 20') can be locked in a folded-down position by means of a toggle mechanism (60), wherein the toggle mechanism (60) comprises a release device (65) which, when actuated, releases the toggle mechanism (60) from a locked, folded-down position of the fastening claw (20, 20'), wherein the release device (65) is configured as a portion of at least one lever element (62) of the toggle mechanism (60).

2. The locking device (100) according to claim 1,
**characterized by**
- at least two fastening claws (20, 20') each with a locking lug (25, 25'), wherein the fastening claws (20, 20') are movably mounted on at least two carriage elements (30, 30'),
- at least two guide rails (40, 40'), wherein in each guide rail (40, 40') can be fastened to a respective longitudinal member (15, 15') at different positions, and the at least two carriage elements (30, 30') are displaceably mounted on the guide rails (40, 40'), wherein at least one compression spring (50) is formed between the carriage elements (30, 30'), so that the two carriage elements (30, 30') are spring-mounted with respect to each other.

3. The locking device (100) according to claim 2,
**characterized in that**
the guide rails (40, 40') are detachably fastened in or on the longitudinal members (15, 15'), preferably in groove-shaped recesses (19) of the longitudinal members (15, 15'), in such a way that the guide rails (40, 40') can be arranged variably with respect to their respective position in relation to the respective longitudinal member (15, 15').

4. The locking device (100) according to claim 2 or 3,
**characterized in that**
the at least two guide rails (40, 40'), the at least two fastening claws (20, 20') and the at least two carriage elements (30, 30') form an assembly, wherein the assembly can be variably positioned and fastened in relation to the longitudinal members (15, 15').

5. The locking device (100) according to one of claims 2 to 4,
**characterized in that**
at least two spring units are formed between the
carriage elements (30, 30'), wherein one spring unit comprises the at least one compression spring (50).

6. The locking device (100) according to one of the preceding claims,
**characterized in that**
at least one guide rail is formed as a C-profile rail.

7. The locking device (100) according to one of the preceding claims,
**characterized in that**
at least one guide rail (40, 40') is detachably fastened to at least one of the longitudinal members (15, 15') by means of a fastening pin (70), in particular a pretensioned fastening pin (70), wherein the fastening pin (70) engages in an opening (16) of the guide rail (40, 40').

8. The locking device (100) according to claim 7,
**characterized in that**
the fastening pin (70) is locked and/or released by means of a link guide device (72).

9. The locking device (100) according to one of the preceding claims,
**characterized in that**
at least one stop element for at least one carriage element (30, 30') is formed in the guide rail (40, 40').

10. The locking device (100) according to one of the preceding claims,
**characterized in that**
at least one carriage element (30, 30') has stop surfaces (34, 34', 36, 36') and/or stop edges which limit a pivoting movement of the fastening claw.

11. A cargo deck of an aircraft comprising at least one locking device (100) according to one of the preceding claims, wherein the frame (10) is fastened to the floor of the cargo deck.

## Revendications

1. Dispositif de verrouillage (100) pour le maintien d'éléments de cargaison dans un pont de chargement d'un avion, comprenant:
- un cadre (10) avec au moins deux longerons (15, 15'),
- un élément de chariot (30, 30'),
- des rails de guidage (40, 40'),
- au moins une griffe de fixation (20, 20') munie d'un ergot de verrouillage (25, 25'), laquelle griffe de fixation (20, 20') est supportée de façon mobile dans l'élément de chariot (30, 30'), la griffe de fixation (20, 20') étant supportée sur l'élément de chariot (30, 30') avec possibilité de rotation autour d'un axe de rotation (35, 35') sensiblement perpendiculaire aux rails de guidage (40, 40')
**caractérisé en ce que**
la griffe de fixation (20, 20') peut être bloquée dans une position basculée au moyen d'un mécanisme de levier à genouillère (60), lequel mécanisme de levier à genouillère (60) comporte un dispositif de déclenchement (65) qui, quand il est actionné, libère le mécanisme de levier à genouillère (60) d'une position bloquée et basculée de la griffe de fixation (20, 20'), le dispositif de déclenchement (65) étant conçu comme une partie d'au moins un élément de levier (62) du mécanisme de levier à genouillère (60) .

2. Dispositif de verrouillage (100) selon la revendication 1,
**caractérisé par** :
- au moins deux griffes de fixation (20, 20') munies chacune d'un ergot de verrouillage (25, 25'), lesquelles griffes de fixation (20, 20') sont supportées de façon mobile dans au moins deux éléments de chariot (30, 30'),
- au moins deux rails de guidage (40, 40'),
dans lequel chaque rail de guidage (40, 40') peut être fixé sur un longeron (15, 15') dans différentes positions et les au moins deux éléments de chariot (30, 30') sont supportés avec possibilité de translation sur les rails de guidage (40, 40'),
dans lequel au moins un ressort de compression (50) est formé entre les éléments de chariot (30, 30') de telle sorte que les deux éléments de chariot (30, 30') sont supportés de façon suspendue l'un par rapport à l'autre.

3. Dispositif de verrouillage (100) selon la revendication 2,
**caractérisé en ce que**
les rails de guidage (40, 40') sont fixés de façon amovible dans ou sur les longerons (15, 15'), de préférence dans des creux en forme de rainure (19) des longerons (15, 15'), de telle manière que les rails de guidage (40, 40') peuvent être disposés dans une position variable par rapport au longeron (15, 15') correspondant.

4. Dispositif de verrouillage (100) selon la revendication 2 ou 3,
**caractérisé en ce que**
les au moins deux rails de guidage (40, 40'), les au moins deux griffes de fixation (20, 20') et les au moins deux éléments de chariot (30, 30') forment un module, lequel module peut être positionné et fixé de façon variable par rapport aux longerons (15, 15').

5. Dispositif de verrouillage (100) selon l'une des revendications 2 à 4, **caractérisé en ce**
**qu'**au moins deux unités de ressort sont formées entre les éléments de chariot (30, 30'), une unité de ressort comportant au moins un ressort de compression (50).

6. Dispositif de verrouillage (100) selon l'une des revendications précédentes,
**caractérisé en ce**
**qu'**au moins un rail de guidage est conformé comme un rail profilé en C.

7. Dispositif de verrouillage (100) selon l'une des revendications précédentes,
**caractérisé en ce**
**qu'**au moins un rail de guidage (40, 40') est fixé de façon amovible sur au moins un des longerons (15, 15') au moyen d'une goupille de fixation (70), en particulier précontrainte, laquelle goupille de fixation (70) se met en prise dans une ouverture (16) du rail de guidage (40, 40').

8. Dispositif de verrouillage (100) selon la revendication 7,
**caractérisé en ce que**
la goupille de fixation (70) est bloquée et/ou libérée au moyen d'un dispositif de guidage à coulisse (72).

9. Dispositif de verrouillage (100) selon l'une des revendications précédentes,
**caractérisé en ce**
**qu'**au moins un élément de butée est formé dans le rail de guidage (40, 40') pour au moins un élément de chariot (30, 30').

10. Dispositif de verrouillage (100) selon l'une des revendications précédentes,
**caractérisé en ce**
**qu'**au moins un élément de chariot (30, 30') comporte des surfaces de butée (34, 34', 36, 36') et/ou des arêtes de butée qui limitent un mouvement pivotant de la griffe de fixation.

11. Pont de chargement d'un avion muni d'au moins un dispositif de verrouillage (100) selon l'une des revendications précédentes, dans lequel le cadre (10) est fixé sur le plancher du pont de chargement.
